# EUROPEAN PATENT SPECIFICATION

(11) **EP 1 062 297 B1**
(45) Date of publication and mention of the grant of the patent: **27.02.2002**
(21) Application number: 98958834.8
(22) Date of filing: 08.12.1998
(51) Int. Cl.: C10G 29/20

(54) **A METHOD OF IMPROVING THE FLOW PROPERTIES OF A CRUDE OIL OR NATURAL GAS LIQUID**
VERFAHREN ZUR VERBESSERUNG DER FLIESSEIGENSCHAFTEN VON ROHÖL UND ERDGAS KONDENSAT
PROCEDE RELATIF A L'AMELIORATION DES PROPRIETES D'ECOULEMENT D'UNE HUILE BRUTE OU D'UN LIQUIDE DE GAZ NATUREL

(30) Priority: 15.12.1997 DK 145597
(43) Date of publication of application: 27.12.2000
(73) Proprietor: MAERSK OLIE OG GAS A/S, 1263 Copenhagen K (DK)
(72) Inventor: HANSEN, Jens, H., DK-2000 Frederiksberg (DK)
(74) Representative: Kyed, Iver
(86) International application number: DK9800535
(87) International publication number: WO9931200

(56) References cited:
- EP-A1- 0 345 008
- GB-A- 2 204 876
- JOURNAL OF PETROLEUM TECHNOLOGY, Volume 46, No. 3, 1994, D. RAM BABU et al., "Downhole Chemical Addition Owing to Convection in Annular Liquid", page 190.
- Swanson, T.A. "Associated Problems and Methods of Treatment for Paraffins/ Asphaltenes in Offshore Production Facilities", India Oil & Gas Review Symposium 1997, pages 80-83

## Description

The present invention relates to a method of improving the flow properties of a wax containing crude oil or natural gas liquid containing a natural pour point depressant by adding a synthetic pour point depressant.

Typically, crude oils and natural gas liquids contain several types of hydrocarbons, such as paraffins, naphtenes and aromatics. However, the paraffins, which are normally liquid or gaseous at reservoir conditions, have the disadvantage that at lower temperatures they tend to form a solid wax phase. In practice this gives rise to problems, such as formation of a gel with a significant gel strength, e.g. during shut down of wells, pipelines, processing plants etc. Likewise problems caused by wax deposition on cold surfaces, e.g. in pipelines and heat exchangers, can occur. Furthermore the formation of a solid wax phase can lead to an increased viscosity, which means that the crude oil or natural gas liquid may become significantly more difficult to handle.

For the purpose of alleviating the above problems it has been known for long to add so-called "pour point depressants" in order to lower the pour point of the crude oil or natural gas liquid, which point according to ASTM D97 or ASTM D5853 is defined as the temperature at which a crude oil or natural gas liquid at given conditions starts to solidify. Such synthetic pour point depressants may comprise a wide range of polymers and copolymers (polyacetates, polyacrylates, polymethacrylates, polyamides, etc.).

The polymers may roughly be divided into nucleators and growth arrestors depending on their function in the crude oil or natural gas liquid. However, it is a common feature thereof that they are incorporated in the solid wax phase and thereby change its structure and properties. To achieve improved efficiency, it is normal practice, cf. Thomas A. Swanson: Associated Problems and Methods of Treatment for Paraffins/Asphaltenes in Offshore Production Facilities, India Oil & Gas Review Symposium 1997, pages 80-83, to add the former type of wax inhibitor at or close to the wax appearance temperature (WAT) of the crude oil or natural gas liquid, which is defined as the temperature at which the wax starts to precipitate. The latter type of wax inhibitor can be added at lower temperatures, although the efficiency hereof seems to increase if the polymer is incorporated already in the solid wax phase first formed.

In certain crude oils and natural gas liquids there are, however, also naturally occurring pour point depressants for instance in the form of asphaltenes, which are a group of heavy polar aromatic compounds having a molecular weight in the range 700-1000 g/mole. These natural pour point depressants are present in the crude oil or natural gas liquid when it is produced from the reservoir, and are normally fully dispersed in the liquid phase at initial reservoir conditions. At lower temperatures they may, however, start to flocculate, which reduces their pour point depressing efficiency. This phenomenon gives rise to the concepts upper and lower pour points, as defined in the standard ASTM D97. Flocculation of the natural pour point depressants may also be induced by changed pressure or mixing with water or other oils/condensates. Just like synthetic pour point depressants they change the structure of the wax phase formed, although in many cases their mere presence does not completely suffice for solving the problems associated with wax precipitation.

In practice during oil production, an amount of the abovementioned synthetic pour point depressants has therefore been added to crude oils and natural gas liquids at a temperature close to the WAT of the crude oil or natural gas liquid, assuming that thereby an additive effect of the natural and synthetic pour point depressants would be obtained.

In certain cases this additive effect does not appear, as the naturally occurring pour point depressants seem to be capable of counteracting and even totally neutralizing the effect of the synthetic pour point depressants.

Consequently, it is the object of the present invention to provide a method of reducing or eliminating the above problems and thereby ensure an effective improvement of the flow properties of crude oils and natural gas liquids.

The method according to the invention is characterized in that the synthetic pour point depressant is added to the crude oil or natural gas liquid at a higher temperature than 20 °C below the inversion temperature of the crude oil or natural gas liquid.

The inversion temperature of a crude oil or natural gas liquid is determined by the use of a modified ASTM D97 or modified ASTM D5853 standard method. These standards specify upper and lower pour points to be measured after reheating the sample to 48 °C and 105 °C, respectively. By reheating the crude oil or natural gas liquid to a given temperature and subsequently determining the pour point of this sample and repeating this measurement at different reheating temperatures and subsequently depicting these pour points as a function of the reheating temperature, the reheating temperature at which the pour point has been reduced to its minimum value can be determined. This point is defined as the inversion temperature, and is the temperature at which the natural pour point depressants are fully active. The result will typically be within the interval 80-110 °C.

The inversion temperature definition is, however, not applicable to hydrocarbon samples, where the upper and lower pour points are identical. This phenomena is believed to be due to the lack of natural pour point depressants mainly found among the asphaltene fraction of the fluid.

When using the method according to the invention it has turned out that in situations in which addition of synthetic pour point depressants has otherwise been without result, a positive effect can be obtained. This is presumably due to the pour point depressant being added to the crude oil or natural gas liquid at a time when the natural pour point depressants are fully or at least partly dispersed. In this way it is avoided that the flocculated natural pour point depressants, which apparently form a separate, polar liquid phase, are capable of absorbing the synthetic pour point depressants by virtue of their content of polar groups.

Due to a more efficient pour point depression, it is possible to obtain a suitable pour point even by addition of small amounts of synthetic pour point depressants. Alternatively, a lower pour point can be obtained by using the usual amount of synthetic pour point depressant.

Preferably the synthetic pour point depressant should be added at a higher temperature than e.g. 10 °C below the inversion temperature, more preferably at or above the inversion temperature. If the synthetic pour point depressant is added at a temperature 20 °C below the inversion temperature of the crude oil or natural gas liquid, the natural pour point depressants are thus not fully dispersed, which means that the efficiency obtained is not optimal.

In practice, the best effect is obtained by injecting the synthetic pour point depressant into the well bore at a depth, where the crude oil or natural gas liquid has a temperature at or higher than the inversion temperature.

An appropriate depth for adding the synthetic pour point depressant, may be determined as the depth at which the formation temperature corresponds to the inversion temperature of the crude oil or natural gas liquid produced. Since the temperature at this point automatically will increase once the production starts, adding the depressant at this depth ensures that the temperature of the crude oil or natural gas liquid will always exceed the inversion temperature when mixed with the synthetic pour point depressant.

The required dosage of synthetic pour point depressant depends on factors such as the type of crude oil, amount of wax formed in the crude oil at different temperatures, ambient conditions etc. The optimum dose rate is normally estimated by means of laboratory measurements of pour point, viscosity, gel strength and wax deposition tendency. The two latter measurements are often carried out on laboratory coils. In practice the synthetic pour point depressant is added in an amount of 5-2000 ppm, preferably 20-500 ppm and most preferably 20-100 ppm.

A preferred synthetic pour point depressant useful in the method according to the invention comprises a chemical compound having the general formula I: 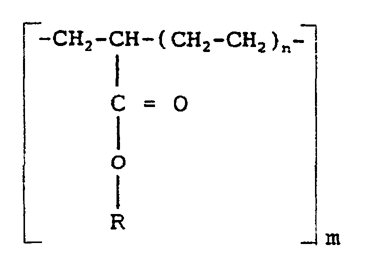 where m = 20-300, preferably m = 25-100 and most preferably m = 50-80, n = 5-50, preferably n = 5-25 and most preferably n = 8-15 and R symbolises a hydrocarbon, preferably an aliphatic hydrocarbon and most preferably an aliphatic hydrocarbon consisting of 2-20 carbon atoms.

However, also other compounds may be used, such as polyacetates, polyacrylates, polymethacrylates, polyamides etc.

The invention is described in more detail in the following examples.

### Example 1

It is the purpose of this experiment to demonstrate a correlation between the temperature of the oil sample at which the synthetic pour point depressant is being added and the efficiency of the synthetic pour point depressant added. In this experiment an oil sample no. 1 having the following characteristics is used:

| | |
|---|---|
| Wax appearance temperature (°C) | 50 |
| Upper pour point (°C) | 33 |
| Lower pour point (°C) | 24-27 |
| Wax content (weight % at -30 °C) | 22 |
| Asphaltene content (weight %) | 0.2 |
| Density (g/cm³) | 0.868 |
| Kinematic viscosity at 80 °C (cSt) | 3.50 |
| Kinematic viscosity at 75 °C (cSt) | 3.91 |
| Kinematic viscosity at 70 °C (cSt) | 4.34 |
| Kinematic viscosity at 65 °C (cSt) | 4.81 |
| Kinematic viscosity at 60 °C (cSt) | 5.36 |
| Kinematic viscosity at 55 °C (cSt) | 6.03 |
| Kinematic viscosity at 50 °C (cSt) | 6.85 |
| Kinematic viscosity at 45 °C (cSt) | 9.31 |
| Kinematic viscosity at 40 °C (cSt) | 14.73 |

The wax appearance temperature of the oil sample was determined from the viscosity measurements.

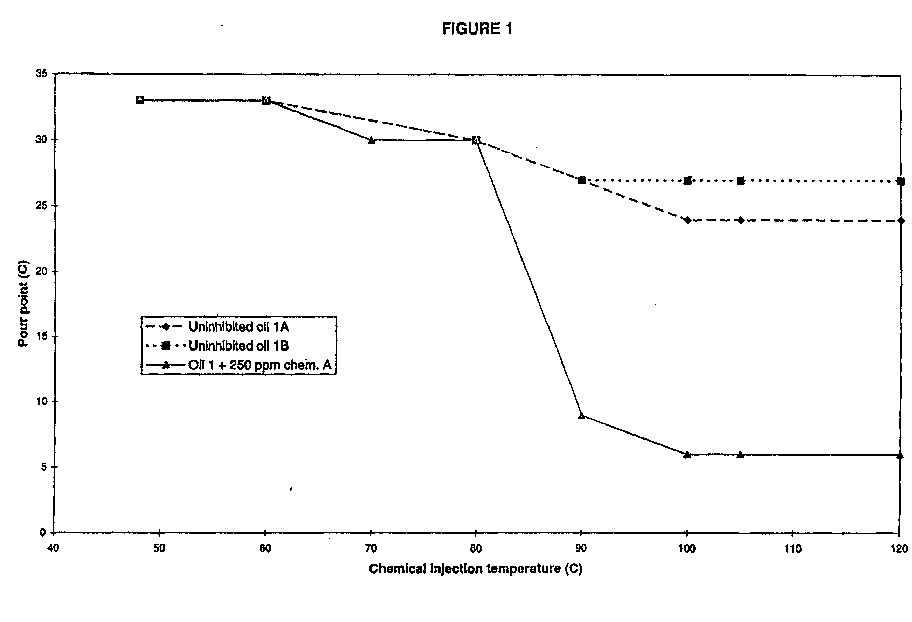

Measurement of the pour point of oil sample no. 1 was then conducted on two uninhibited subsamples nos. 1A and 1B by heating the oil samples to various temperatures succeeded by cooling in order to determine the pour point of the oil samples. From the results of the measurements, in Figure 1, showing the pour point as a function of the reheating temperature, it is seen that the inversion temperature of the oil sample may vary from 90 to 100 °C.

Then the same oil sample no. 1 was again heated to different temperatures, followed by addition of 250 ppm of a chemical additive A comprising a synthetic pour point depressant, and the effect hereof was examined by measuring the pour point of the oil sample, by letting it cool down in accordance with standard procedure ASTM D97. The result hereof is also seen from Figure 1 (250 ppm of chem. A). It appears clearly that the pour point of the oil sample no. 1 with addition of additive A follows the trend of the two uninhibited subsamples up until approx. 80 °C, above which point the additive becomes active with a resulting strong decrease in the pour point of the oil sample.

This is consistent with the theory proposed, as the 100 °C corresponds to the inversion temperature of the oil sample no. 1B, which means that the natural pour point. depressants here are fully dispersed. Thus Figure 1 shows that for this very waxy crude oil sample a pour point improvement of the magnitude of 18-21 °C can be observed with chemical dosage of only 250 ppm.

### Example 2

It is the purpose of this example to demonstrate that in accordance with the proposed theory, it is only in case of crude oil or natural gas liquid samples containing natural pour point depressants that the favourable effect of an increased chemical injection temperature is achieved. In this experiment an oil sample no. 2 having the following characteristics is used:

| | |
|---|---|
| Wax appearance temperature (°C) | 40 |
| Upper pour point (°C) | 12 |
| Lower pour point (°C) | 12 |
| Wax content (weight % at -30 °C) | 10.4 |
| Asphaltene content (weight %) | <0.05 * |
| Density (g/cm³) | 0.799 |
| Kinematic viscosity at 70 °C (cSt) | 1.224 |
| Kinematic viscosity at 60 °C (cSt) | 1.394 |
| Kinematic viscosity at 50 °C (cSt) | 1.596 |
| Kinematic viscosity at 40 °C (cSt) | 1.866 |
| Kinematic viscosity at 30 °C (cSt) | 2.733 |
| Kinematic viscosity at 20 °C (cSt) | 5.4 |

| | |
|---|---|
| * detection limit | |

The wax appearance temperature of the oil sample no. 2 was determined from the viscosity measurements.

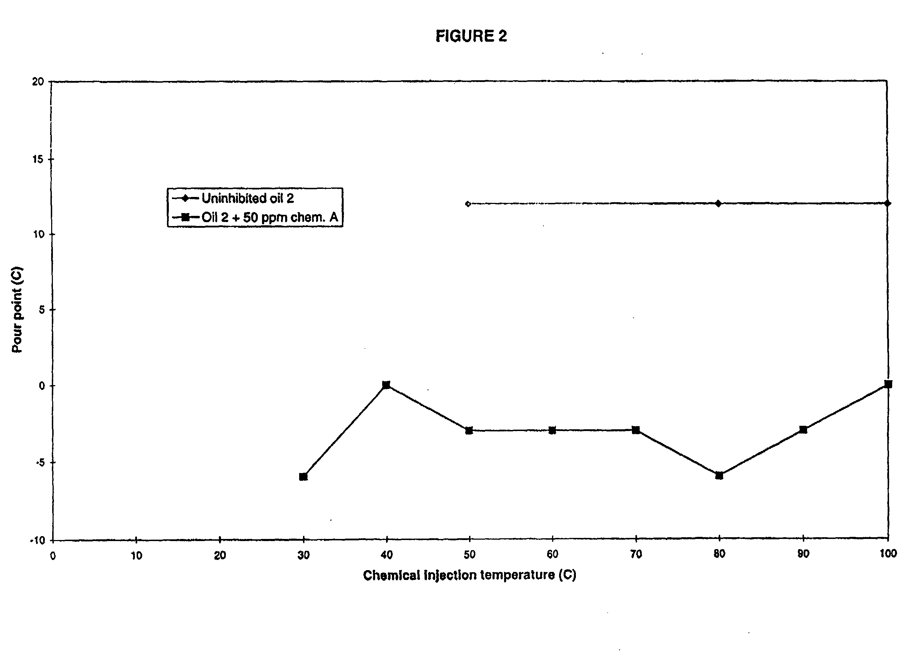

Measurements of the pour point of the uninhibited oil sample no. 2 as a function of the heating temperature were conducted, as stated above, and the results appear from Figure 2. It should be noted that upper and lower pour point are identical, which is strongly indicative of the absence of natural pour point depressants.

Hereafter the pour point was determined again following addition of 50 ppm of chemical additive A (same as in example 1) in order to test the effect of the addition temperature according to the above example. As is seen from Figure 2 (50 ppm of chem. A), the temperature has no influence on the efficiency of the additive, which according to the proposed theory is consistent with the missing content of natural pour point depressants.

## Claims

1. A method of improving the flow properties of a wax-containing crude oil or natural gas liquid, excluding Bahrain pitch, containing asphaltenes and other wax-containing crude oils or natural gas liquids displaying non-identical upper and lower pour points (ASTM D97/D5853) comprising the addition of a synthetic pour point depressant, **characterized in that** the synthetic pour point depressant is added to the crude oil or natural gas liquid at a temperature not more than 20 °C below the inversion temperature of the crude oil or natural gas liquid, as determined by a procedure comprising the steps of heating samples of the crude oil or gas liquid to various temperatures; determining the pour points of said samples after cooling; depicting the pour points determined as a function of the heating temperatures and determining the heating temperature at which the pour point has been reduced to its minimum value, said temperature being defined as the inversion temperature.

2. A method according to claim 1, **characterized in that** the synthetic pour point depressant is added to the crude oil or natural gas liquid at a higher temperature than 10 °C below the inversion temperature, preferably at a temperature at or above the inversion temperature.

3. A method according to claim 1 or 2, **characterized in that** the synthetic pour point depressant comprises a substance having the formula I: 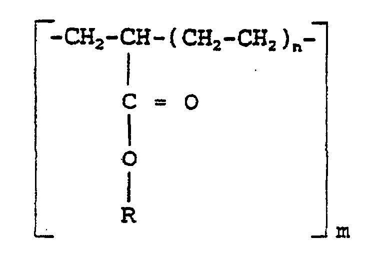 where m = 20-300, preferably m = 25-100 and most preferably m = 50-80, n = 5-50, preferably n = 5-25 and most preferably n = 8-15 and R symbolizes a hydrocarbon, preferably an aliphatic hydrocarbon and most preferably an aliphatic hydrocarbon consisting of 2-20 carbon atoms.

4. A method according to any of the above claims, **characterized in that** the synthetic pour point depressant is added in an amount of 5-2000 ppm, preferably 20-500 ppm and most preferably 20-100 ppm.

5. A method according to any of the above claims, **characterized in that** the synthetic pour point depressant is injected into the well bore.

## Patentansprüche

1. Verfahren zum Verbessern der Fließeigenschaften eines wachsenthaltendes Rohöl oder Erdgasflüssigkeit ausschließlich Bahrain-Pech, die enthalten Asphaltene, und anderer wachsenthaltender Rohöle oder Erdgasflüssigkeiten, die nicht identische obere und untere Pourpoints haben (ASTM D97/D5853), umfassend die Zugabe eines synthetischen Pourpointerniedrigers, **dadurch gekennzeichnet, daß** der synthetische Pourpointerniedriger zu dem Rohöl oder der Erdgasflüssigkeit bei einer Temperatur von nicht mehr als 20 °C unter der Inversionstemperatur des Rohöls oder der Erdgasflüssigkeit zugegeben wird, wie sie durch einen Vorgang bestimmt wird, der die Schritte des Erwärmens von Proben des Rohöls oder der Erdgasflüssigkeit auf verschiedene Temperaturen; des Bestimmens der Pourpoints der Proben nach dem Abkühlen; des Darstellens der bestimmten Pourpoints als Funktion der Erwärmungstemperaturen und des Bestimmens der Erwärmungstemperatur, bei welcher der Pourpoint auf seinen Minimalwert reduziert wurde, enthält, welche Temperatur als die Inversionstemperatur definiert ist.

2. Verfahren nach Anspruch 1, **dadurch gekennzeichnet, daß** der synthetische Pourpointerniedriger zu dem Rohöl oder der Erdgasflüssigkeit bei einer höheren Temperatur als 10 °C unter der Inversionstemperatur, vorzugsweise bei einer Temperatur auf oder über der Inversionstemperatur zugegeben wird.

3. Verfahren nach Anspruch 1 oder 2, **dadurch gekennzeichnet, daß** der synthetische Pourpointerniedriger einen Stoff enthält, der die Formel I hat: 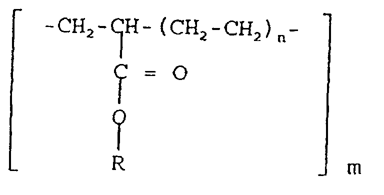 worin m = 20 - 300, vorzugsweise m = 25 - 100 und höchst bevorzugt m = 50 - 80, n = 5 - 50, bevorzugt n = 5 - 25 und höchst bevorzugt n = 8 - 15, und R einen Kohlenwasserstoff, vorzugsweise einen aliphatischen Kohlenwasserstoff und höchst bevorzugt einen aliphatischen Kohlenwasserstoff, der aus 2 - 20 Kohlenstoffatomen besteht, symbolisiert.

4. Verfahren nach einem der vorstehenden Ansprüche, **dadurch gekennzeichnet, daß** der synthetische Pourpointerniedriger in einer Menge von 5 - 2000 ppm, bevorzugt 20 - 500 ppm und höchst bevorzugt 20 - 100 ppm zugegeben wird.

5. Verfahren nach einem der vorstehenden Ansprüche, **dadurch gekennzeichnet, daß** der synthetische Pourpointerniedriger in das Bohrloch eingespritzt wird.

## Revendications

1. Procédé pour améliorer les propriétés d'écoulement d'une pétrole ou d'un gaz naturel liquide contenant de la cire á l'exclusion du forage du Bareïn contenant des asphalènes et d'autres pétroles ou gaz naturel liquides contenant de la cire affichant des points d'écoulement supérieurs et inférieurs non identiques (ASTM D97/D5853), comprenant l'addition d'un abaisseur de point d'écoulement synthétique, **caractérisé en ce que** l'abaisseur de point d'écoulement synthétique est ajouté au pétrole ou au gaz naturel liquide à une température qui n'est pas supérieure de 20 °C au-dessous de la température d'inversion du pétrole ou du liquide de gaz naturel, tel que déterminé par un protocole comprenant les étapes consistant à chauffer les échantillons de pétrole ou de gaz liquide à diverses températures; à déterminer les points d'écoulement desdits échantillons après refroidissement; à représenter les points d'écoulement déterminés sous forme de fonction des températures de chauffage et à déterminer la température de chauffage à laquelle le point d'écoulement a été réduit à sa valeur minimale, ladite température étant définie comme la température d'inversion.

2. Procédé selon la revendication 1, **caractérisé en ce que** l'abaisseur de point d'écoulement synthétique est ajouté au pétrole ou au gaz naturel liquide à une température supérieure de 10 °C au-dessous de la température d'inversion, de préférence à une température à ou au-dessus de la température d'inversion.

3. Procédé selon la revendication 1 ou 2, **caractérisé en ce que** l'abaisseur de point d'écoulement synthétique comprend une substance ayant pour formule I: 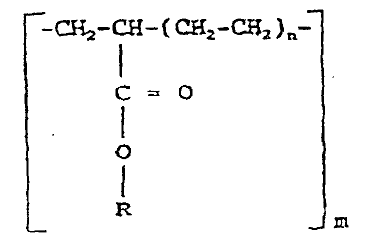 dans laquelle m = 20 à 300, de préférence m = 25 à 100 et plutôt de préférence m = 50 à 80, n = 5 à 50, de préférence n = 5 à 25 et plutôt de préférence n = 8 à 15 et R symbolise et hydrocarbure, de préférence un hydrocarbure aliphatique et plutôt de préférence un hydrocarbure aliphatique constitué de 2 à 20 atomes de carbone.

4. Procédé selon l'une quelconque des revendications précédentes, **caractérisé en ce que** l'abaisseur de point d'écoulement synthétique est ajouté en une quantité allant de 5 à 2000 ppm, de préférence de 20 à 500 ppm et plutôt de préférence de 20 à 100 ppm.

5. Procédé selon l'une quelconque des revendications précédentes, **caracterisé en ce que** l'abaisseur de point d'écoulement synthétique est injecté dans le puits de forage.
